Europäisches Patentamt

European Patent Office

Office européen des brevets

(11) Veröffentlichungsnummer: **0 309 717**

**A1**

(12) **EUROPÄISCHE PATENTANMELDUNG**

(21) Anmeldenummer: 88113393.8

(22) Anmeldetag: **18.08.88**

(51) Int. Cl.⁴: **H04N 5/12**

(30) Priorität: **30.09.87 DE 3732942**

(43) Veröffentlichungstag der Anmeldung:
**05.04.89 Patentblatt 89/14**

(84) Benannte Vertragsstaaten:
**AT BE CH DE ES FR GB GR IT LI LU NL SE**

(71) Anmelder: **Deutsche Thomson-Brandt GmbH**
**Hermann-Schwer-Strasse 3 Postfach 1307**
**D-7730 Villingen-Schwenningen(DE)**

(72) Erfinder: **Berger, Philippe**
**Wilstorfstrasse 44**
**D-7730 Villingen-Schwenningen(DE)**
Erfinder: **Berland, Pierre-Axel**
**Obere Waldstrasse 4**
**D-7730 Villingen-Schwenningen(DE)**

(54) **Schaltungsanordnung für Fernsehempfänger mit einer Anordnung zur Erzeugung eines Identifikationssignals.**

(57) 1. Schaltungsanordung zur Erzeugung eines Video-Identifikationssignals für Fernsehempfänger.

2.1 Die Erfindung ermöglicht einen After-Hour-Betrieb von Videotext ohne Synchronisationsstörungen.

2.2 Es ist eine Vorrichtung vorgesehen, die ein Zeitfenster für das Zeilensynchronsignal bildet, das eine bistabile Kippstufe setzt, die von Clock-Impulsen nach jedem Fensterimpuls zurückgesetzt wird. Die Signale der bistabilen Kippstufe gelangen über ein Schieberegister an den Ausgang. Bei mehrmaligem Eintreffen von Zeilensynchronimpulsen wird das Identifikationssignal erzeugt. Bei mehrmaligem Fehlen von Zeilensynchronimpulsen wird das Identifikationssignal unterdrückt.

2.3 Videotextbetrieb in Fernsehempfängern ohne Sendersignal.

Fig.1

EP 0 309 717 A1

## Schaltungsanordnung für Fernsehempfänger mit einer Anordnung zur Erzeugung eines Identifikations-signals.

Die Erfindung betrifft eine Schaltungsanordnung für Fernsehempfänger mit einer phasengeregelten Oszillatorschaltung zur Erzeugung eines Synchronsignals sowie einer Anordnung zur Erzeugung eines Identifikationssignals zur Erkennung eines Videosignals.

Es sind Schaltungen bekannt, die die Signale für die Horizontal- und Vertikalablenkung in Fernsehempfängern erzeugen. Die Anordnung zur Erkennung, ob ein Videosignal am Empfängereingang anliegt oder nicht, gestattet die Erzeugung eines MUTE-Signals, welches z.B. die Tonendstufe des Fernsehempfängers stummsteuert, wenn kein Videosignal empfangen wird, was z.B. wichtig ist, damit keine fremden Funkdienste abgehört werden können, deren Frequenzen im Fernsehempfangsband liegen. In den bekannten zumeist integrierten Schaltkreisen wird die Erkennung eines Videosignals mit Hilfe eines Koinzidenzdetektors erreicht. Die Schaltung besitzt hierfür einen Keramikoszillator, der mit einer Frequenz von 500 kHz schwingt, die mit Hilfe einer Steuerspannung um plus minus 20 kHz veränderbar ist. Der Oszillator liefert Impulse an einen Frequenzteiler, der ein zeilenfrequentes Signal erzeugt. Dieses zeilenfrequente Signal wird mit dem Zeilensynchronsignal des Senders in einer Komparatorschaltung sowohl hinsichtlich Phase als auch Frequenz verglichen. Der Komparator liefert eine Korrekturspannung, mit der die Frequenz des Oszillators auf ein Vielfaches der Zeilenfrequenz nachgeregelt wird. Der Schaltkreis erzeugt weiterhin ein zeilenfrequentes Prüfsignal, das aus Impulsen besteht, deren Dauer wesentlich kürzer ist, als die Dauer der Zeilensynchronimpulse. Die Phase dieses Prüfsignals ist derart, daß es mit den Zeilensynchronimpulsen koinzident ist, wenn der Oszillator richtig eingestellt ist. Eine logische Torschaltung und ein Integrationskondensator erzeugen einen Gleichspannungspegel, welcher zur Erkennung eines Videosignals herangezogen wird.

Fernsehempfänger neuerer Generation besitzen Videotextdecoder mit einem Bildspeicher, in welchen Videotextseiten abspeicherbar sind. Diese gespeicherten Videotextseiten können im sogenannten "After-Hour-Betrieb" aufgerufen und auf dem Bildschirm sichtbar gemacht werden. Der After-Hour-Betrieb ist dadurch gekennzeichnet, daß die Wiedergabe des Videotextes auch dann möglich ist, wenn kein Sender mehr in Betrieb ist und die Synchronimpulse für den Videotextdecoder fehlen. Die Synchronisierung erfolgt in diesem Fall durch intern im Fernsehempfänger erzeugte Synchronimpulse. Der zuvor erwähnte Video-Koinzidenzdetektor besitzt jedoch für den After-Hour-Betrieb einen großen Nachteil. Bei Abwesenheit eines Videosignals nämlich muß die Phasenregelschleife ausser Betrieb sein, damit der Oszillator bei Auftreten eines Videosignals sofort einrasten kann. Dadurch treten aber Phasenstörungen auf, die das Bild unstabil machen, da der Oszillator unstabil schwingt.

Der Erfindung liegt die Aufgabe zugrunde, einen störungsfreien Wiedergabebetrieb von Videotextseiten bei fehlendem Sendersignal zu ermöglichen. Diese Aufgabe wird durch die im Patentanspruch angegebene Erfindung gelöst. Weitere Ausgestaltungen der Erfindung ergeben sich aus dem Unteranspruch.

Die Erfindung wird nachstehend mit Hilfe der Zeichnung erläutert.

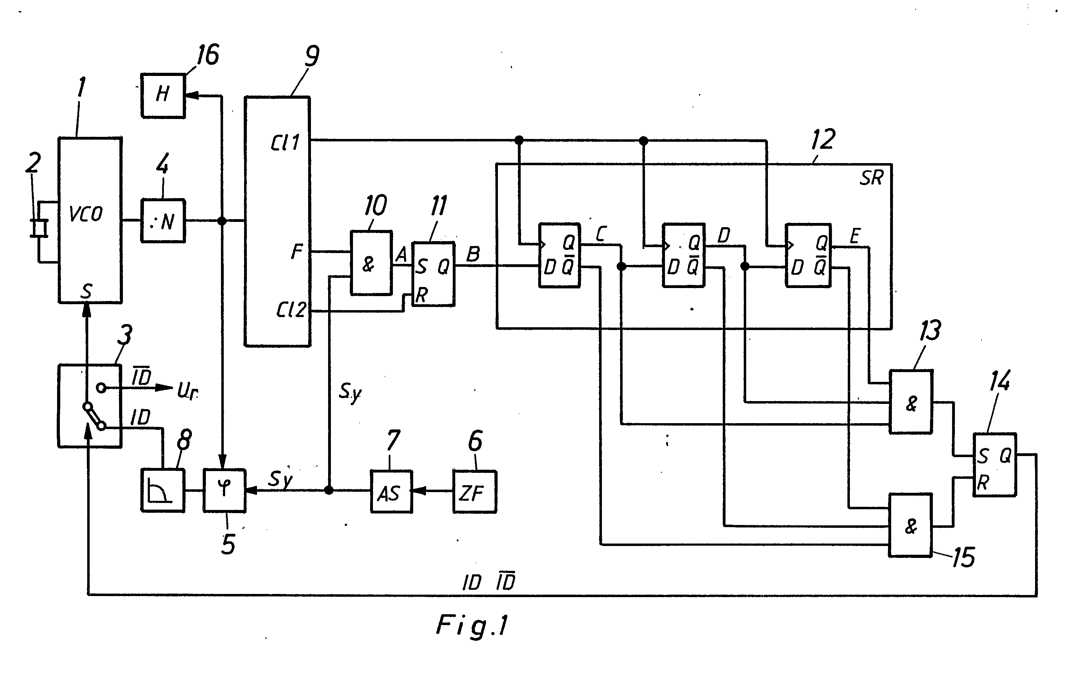

Figur 1 zeigt ein Schaltbild der Erfindung

Figur 2 zeigt Diagramme zur Erläuterung der Wirkungsweise der Erfindung.

Bei Abwesenheit eines Videosignals schwingt der Oszillator 1 auf der Resonanzfrequenz des Keramikresonators 2. Der Steuereingang S des Oszillators 1 ist auf ein festes Potential Ur über eine Schaltstufe 3 gelegt, die durch das Identifikationssignal ID umgeschaltet wird. Der Oszillator 1 ist bei Anwesenheit eines Videosignals in bekannter Weise mit Hilfe einer Phasenregelschleife geregelt. Die Frequenz des Oszillators 1 wird mit Hilfe des Teilers 4 auf Zeilenfrequenz heruntergeteilt. Diese geteilte Frequenz wird in einer Phasenvergleichstufe 5 mit der Frequenz des Zeilensynchronsignals Sy verglichen, das aus der Zwischenfrequenzverstärkerstufe 6 und dem Amplitudensieb 7 kommt. Die Spannung der Phasenvergleichstufe 5 gelangt über den Tiefpaß 8 an den Steuereingang S des Oszillators 1.

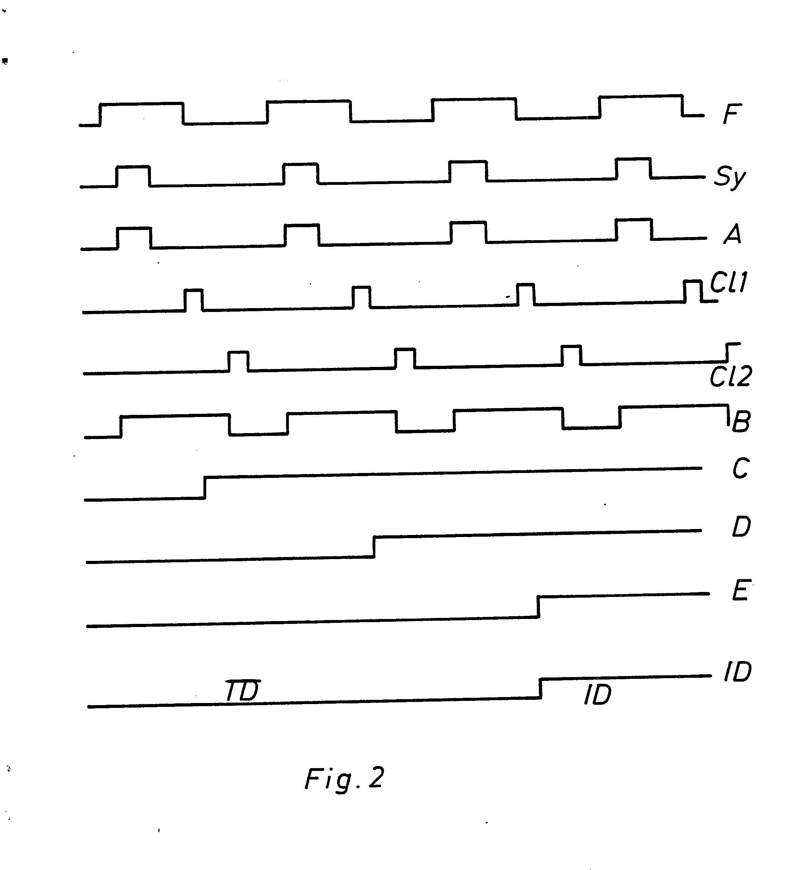

Nachfolgend wird die Erzeugung des Identifikationssignals ID in Verbindung mit Figur 2 beschrieben. Die von dem Teiler 4 erzeugten zeilenfrequenten Impulse gelangen zum einen an die Ablenkstufe 6 des Fernsehempfängers und zum anderen auf den Eingang einer Logikschaltung 9, welche verschiedene Impulsreihen F, CI1, CI2 liefert. Mit F ist ein Fensterimpuls definiert, der eine derart genügende Dauer besitzt, daß bei Anwesenheit eines Videosignals mit Sicherheit die aus dem Amplitudensieb 7 kommenden Zeilensynchronimpulse Sy in diese Fensterimpulse fallen können. Eine UND-Schaltung 10 erzeugt ein mit A bezeichnetes Signal, welches ein RS-Flip-Flop 11 setzt, welches ein Signal B an den Dateneingang D eines Schieberegisters 12 legt. Das Schieberegister 12 ist hier als dreistufig dargestellt. Es kann jedoch auch aus noch mehr Stufen bestehen, wenn die Störsicherheit zur Feststellung eines Videosignals erhöht werden soll. Ein kurz nach dem Erscheinen des Fensterimpulses F auftretender Cl1-Impuls aus der Logikschaltung 9 gelangt auf die Trigger-Eingänge der Stufen des Schieberegisters 12, welches die aus dem RS-Flip-Flop 11 kommenden Daten weitertaktet. Cl2-Impulse aus der Logikschaltung 9 setzen zwischen den Fensterimpulsen F das RS-Flip-Flop 11 jeweils zurück, damit bei erneutem Eintreffen eines Fensterimpulses ein Zeilensynchronimpuls Sy festgestellt werden kann. Es ergeben sich auf den einzelnen Ausgangsleitungen der Stufen des Schieberegisters 12 die mit C, D und E bezeichneten Signale in Figur 2. Bei der Annahme eines dreistufen Schieberegisters wird bei dreimaligem Auftreten eines Zeilensynchronimpulses durch die Signale C, D und E die UND-Bedingung einer angeschlossenen UND-Schaltung 13 erfüllt, so daß das RS-Flip-Flop 14 gesetzt wird und an seinem Ausgang ein ID-Signal entsteht, welches die Schaltstufe 3 umschaltet, so daß der Steuereingang S des Oszillators 1 an die Regelschleife angeschaltet wird. Fehlt der Zeilensynchronimpuls drei mal hintereinander, ist die UND-Bedingung der UND-Schaltung 15 erfüllt, so daß das RS-Flip-Flop 14 zurückgesetzt wird und so das Signal ID erzeugt wird.

Die soeben beschriebene Schaltungsanordnung eignet sich wegen der digitalen Baugruppen außerordentlich gut für einen Aufbau in integrierter Schaltungstechnik.

## Ansprüche

1. Schaltungsanordnung für Fernsehempfänger mit einer phasengeregelten Oszillatorschaltung zur Erzeugung eines Synchronsignals sowie einer Anordnung zur Erzeugung eines Identifikationssignals zur Erkennung eines Videosignals, **gekennzeichnet durch** eine Vorrichtung (9-15), die ein Zeitfenster zwecks Verknüpfung mit dem Zeilensynchronsignal eines Sendersignals erzeugt und daß die in dieses Zeitfenster fallenden Zeilensynchronimpulse eine bistabile Kippstufe (11) setzen, welche von zwischen den Fensterimpulsen (F) liegenden Clockimpulsen (Cl2) jeweils zurückgesetzt wird, und daß der Ausgang dieser bistabilen Kippschaltung (11) an den Eingang eines n-stufigen Schieberegisters (12) geschaltet ist, dessen n Q und $\overline{Q}$ -Ausgänge der einzelnen Stufen über Verknüpfungsschaltungen (13, 15) an eine bistabile Kippstufe (14) geschaltet sind, an deren Ausgang das Identifikationssignal (ID) abnehmbar ist.

2. Schaltungsanordnung nach Anspruch 1, **dadurch gekennzeichnet**, daß das Identifikationssignal (ID) an eine Schaltstufe (3) gelegt ist, welche den Steuereingang (S) des phasengeregelten Oszillators (1) bei vorhandenem Videosignal mit der Phasenregelschleife verbindet und bei nicht vorhandenem Videosignal den Steuereingang (S) des phasengeregelten Oszillators (1) auf eine feste Bezugsspannung (Ur) schaltet.

Fig.1

Fig. 2

F

Sy

A

Cl1

Cl2

B

C

D

E

ID

TD        ID

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 11, Nr. 55 (E-481)[2502], 20. Februar 1987; & JP-A-61 214 868 (SONY CORP.) 24-09-1986 --- | 1,2 | H 04 N 5/12 |
| A | PATENT ABSTRACTS OF JAPAN, Band 7, Nr. 72 (E-166)[1217], 25. März 1983; & JP-A-58 3376 (NIPPON VICTOR K.K.) 10-01-1983 ----- | 1 | |

RECHERCHIERTE SACHGEBIETE (Int. Cl.4)

H 04 N

Der vorliegende Recherchenbericht wurde für alle Patentansprüche erstellt

| Recherchenort | Abschlußdatum der Recherche | Prüfer |
|---|---|---|
| DEN HAAG | 27-10-1988 | PIGNIEZ T.J.P. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument